# EUROPEAN PATENT APPLICATION

(11) **EP 0 945 808 A2**
(43) Date of publication of application: **29.09.1999**
(21) Application number: 98124129.2
(22) Date of filing: 18.12.1998
(51) Int. Cl.: G06F 15/02, B41J 3/407

(54) **Tape printing apparatus**

(30) Priority: 27.03.1998 GB 9806717
(71) Applicant: ESSELTE N.V., 9100 St. Niklaas (BE)
(72) Inventor: Schoovaerts, Jan, 3140 Keerbergen (BE); Dunn, Antony Roy, CB4 1LE Cabridge (GB)
(74) Representative: Franzen, Peter

(57) **Abstract**

A label printing device is disclosed which is operable to convert a first numeric value represented by an inputted first character string into a second numeric value represented by a second character string, by multiplication (or division) of the first numeric value with a predetermined value, and to print the first character string and the second character string onto the image receiving tape (114). Thus, a key (47) having a function marked with a Euro symbol is present. When this key is depressed, the user inputs a price in a first currency. The second price is obtained by multiplying the inputted price with a fixed conversion factor, and printed onto a label. The first currency and thus the conversion factor could be fixed (country-specific) or user-defined.

## Description

The present invention relates to tape printing apparatus.

Known tape printing apparatus of the type with which the present invention is generally concerned are disclosed in EP-A-322918 and EP-A-322919 (Brother Kogyo Kabushiki Kaisha) and EP-A-267890 (Varitronics). These apparatus each include a cassette receiving bay for receiving a cassette or tape holding case. In EP-A-267890, the tape holding case houses an ink ribbon and a substrate tape, the latter comprising an upper image receiving layer secured to a backing layer by an adhesive. In EP-A-322918 and EP-A-322919, the tape holding case houses an ink ribbon, a transparent image receiving tape and a double sided adhesive tape which is secured at one of its adhesive coated sides to the image receiving tape after printing and which has a backing layer peelable from its other adhesive coated side. With both these apparatus, the image transfer medium (ink ribbon) and the image receiving tape (substrate) are in the same cassette. In EP-A-578372 (in the name of the present Applicant), the substrate tape is similar to that described in EP-A-267890 but is housed in its own tape holding case while the ink ribbon is similarly housed in its own tape holding case.

In these apparatus, the image receiving tape passes in overlap with the ink ribbon to a print zone consisting of a fixed print head and a platen against which the printhead can be pressed to cause an image to transfer from the ink ribbon to the image receiving tape. This is usually performed by thermal printing where the print head is heated and the heat causes ink from the ink ribbon to be transferred to the image receiving tape. Alternatively, the print head may be in direct contact with a thermally sensitive image receiving tape whereby when the print head is heated, an image is defined on the image receiving tape.

In 1999, a new common currency is introduced in a number of countries of the European Union, the so-called Euro. When a user intends to mark prices of products in two distinct currencies, he has in the prior art the possibility to use a pocket calculator (or calculate in his head or on paper) in order to obtain a price in a second currency, as Euro, and to input both prices by means of the keyboard of the tape printer, in order to print both prices onto an image receiving tape, which could then be used for labelling the product. This is somewhat complicated an involves a rather high risk of erroneous inputting operations, since the values have to be inputted at least two times.

Thus, it is an object of the present invention to provide a tape printing apparatus which makes printing of values representing prices in distinct currencies easier.

According to the invention, there is provided a tape printing apparatus for printing a label image on an image receiving tape comprising:
input means for inputting characters and numerals for defining a label image to be printed;
printing means for printing said label image onto the image receiving tape;
a controller connected to the input means, and operable to control the printing means;
   characterised in that the controller is operable to convert a first numeric value represented by an inputted first character string into a second numeric value represented by a second character string, by multiplication (or division) of the first numeric value with a predetermined value, and to print the first character string and the second character string onto the image receiving tape.

It is proposed to introduce a calculation function into the tape printer. The user inputs a first character string representing a first price, and the controller of the tape printer multiplies the numeric value represented by the first character string with a predetermined value. This predetermined value is the conversion factor. It should be noted that alternatively a division by the predetermined value would be possible, as well. Whether a multiplication or a division is more appropriate depends on the availability of the respective values, but a multiplication is normally preferred since it is easier to implement. In a case where only a value suitable for division is available, this operation could however be used, as well. The value for division is of course the reciprocal of a value for multiplication. Thus, a second character string is obtained which represents a second numeric value, identifying a price in a second currency. Both the first and the second character string are printed onto the tape. Thus, the user can easily obtain a label on which prices in two distinct currencies are printed. It should be noted that the tape printer could also be operable to show both values, ie the first and the second character string on a display, or at least the second character string. The tape printer could thus serve as a currency conversion calculator, without having the necessity to print each price onto the tape. The first character string and/or the second character string comprises at least one numeral and optionally a decimal point or comma.

In a preferred embodiment of the invention, the input means of the tape printer comprises a key, preferably marked with a currency symbol as `Euro', upon depression of which the controller is operable to receive a first character string, and to print the first character string and the second character string onto the image receiving tape upon depression of a second key. The second key is preferably a print key. It should be mentioned that the inputting operation of the first character string can also be terminated by depression of a return or OK key. Then, the second character string could be shown on the display of the tape printer, and upon depression of the print key, the first and the second character string would be printed.

The predetermined value (= conversion factor) can be fixed, and preferably depend on a specific country in which the apparatus is intended to be used. For a tape printer to be used in Germany, the conversion factor would thus allow to multiply values representing amounts in DM into Euro values. Alternatively, the predetermined value can be user defined. In this case, a function key is provided, upon depression of which the controller is operable to receive a user-inputted predetermined factor. In another embodiment of the invention, the predetermined factor is pre-stored with a country specific value, but can be altered when appropriate. This can be achieved by a special procedure, which could be initiated by depression of a key when the tape printer is switched on, or by a certain combination of keystrokes. The tape printer could also be operable to display the actually predetermined value stored in the tape printer, such that a user can easily check whether this value is still correct, or has to be altered. It should be mentioned that the response to the question whether a fixed or user defined predetermined value is more appropriate also depends on the legal situation; it is intended to have fixed conversion factors in the EU states participating the European Currency System from January 1999 on, such that a user inputted factor is in this case less appropriate.

In a preferred embodiment of the invention, another key is provided, upon depression of which the controller is operable to receive a second character string, and to print the second character string and a first character string onto the image receiving tape upon depression of a second key, whereby the first character string represents a numeric value obtained by division or multiplication of a numeric value represented by the second character string with the predetermined value. The intention behind this key is to have an inverted conversion from a second to a first currency, eg from Euro to a national currency.

Finally, it is proposed that the first character string and the second character string are printed onto the image receiving tape together with associated currency symbols. This is user friendly and avoids any confusion.

For a better understanding of the present invention and as to show how the same may be carried into effect, reference will now be made by way of example to the accompanying figures in which:
Figure 1 shows a schematic view of a tape printing apparatus embodying the present invention;
Figure 2 shows the display in an alternative embodiment of the invention when the shift key is actuated together with the key for letter "U";
Figure 3 shows the display when the shift and the key for the letter "L" are actuated at the same time;
Figures 4A and 4B show the display when the shift key and the space key are actuated together;
Figure 5 shows the inside of the cassette receiving bay of the tape printing apparatus of figure 1;
Figure 6 shows a schematic view of the control circuitry for the tape printing apparatus of Figure 1; and
Figure 7 is a flow diagram indicating a currency conversion operation.

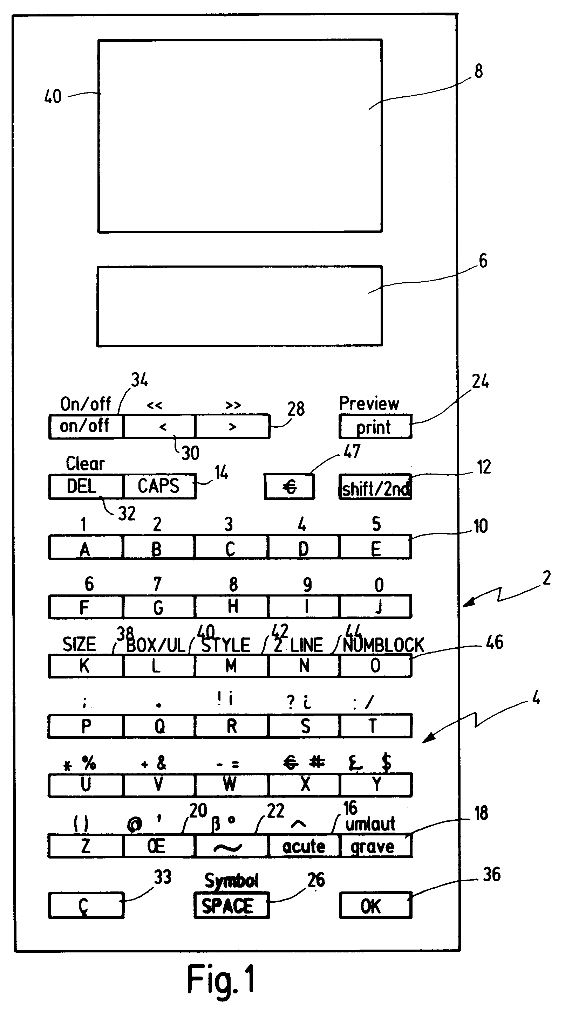

Figure 1 shows a simplified plan view of a tape printing apparatus 2. The tape printing apparatus 2 comprises a keyboard 4, a display 6 and a cassette receiving bay 8.

The keyboard 4 includes a primary level of function and a secondary level of function. Generally, the primary level of function is obtained by simply actuating a given key. The secondary level of function is obtained by actuating a shift key 12 in association with one of the other keys. The keyboard includes a key 10 for each letter of the alphabet along with the following symbols. Simply actuating key 16 provides an acute accent whilst actuation of key 18 provides a grave accent. Simple actuation of keys 20 and 22 provide the two following symbols: OE and ∼.

Another primary level function is obtained by actuation of key 32 which provides a delete function. Keys 28 and 30, as a primary function provide forward and backward cursor movement. Key 24, as a primary function, causes a label to be printed. Actuation of key 26 provides a space function whilst actuation of key 33 provides Ç.

When any of the character keys 10 is actuated, a small version of the letter will be selected and displayed. If a capital letter version of the letter is required, the caps key 14 should be actuated at the same time as the key 10 for the required character. This will then cause the selected letter to be displayed in capital letter form.

The on/off key 34 is a toggle switch. As such, if the tape printing apparatus is off when the key is actuated, the tape printing apparatus 2 will then be switched on and vice versa.

As a secondary function, ten of the character keys 10 have associated therewith the numbers 0 to 9. These numbers are obtained by actuating the shift key 12 in association with the relevant character key 10 associated with the desired number. The symbols associated with the keys for letters "P" and "Q" and the keys for the acute and grave accents can all be obtained by simply actuating the shift key 12 at the same time as the relevant key. For these keys only two symbols are associated with a given key, one through simple actuation of the key and one through actuation of the shift key together with the key in question.

However, as can be seen from Figure 1, a number of the character keys have two further symbols associated therewith. In order to select one of these further symbols, the following procedure is followed. The shift key 12 is actuated at the same time as the relevant character key, for example, the key 10 for the letter "U".

The first symbol "*" associated with the letter "U" key is inserted into the input image at the current position of the cursor. The input image is displayed as it is entered on the display 6. The inserted symbol is highlighted in that the inserted symbol alternates with an associated icon. To select the second symbol "%" associated with letter "U" key, one of the cursor keys 28 or 30 is actuated and the second symbol is now displayed in the input image at the location of the cursor. Again the display of the second symbol alternates with the associated icon. The cursor keys 28 or 30 allows the user to toggle between the first and second symbols. To confirm the choice of symbol, the OK key 36 or the print key 24 is actuated and the apparatus 2 returns to its normal input mode of operation. If instead the delete key DEL 32 is actuated, the newly inserted symbol will be deleted and the apparatus will return to its normal input mode of operation. If instead of actuating the OK key 36, the print key 24 or the delete key DEL 32, the OFF key 34 is actuated, the newly inserted character will remain in the text and the apparatus 2 will be turned off.

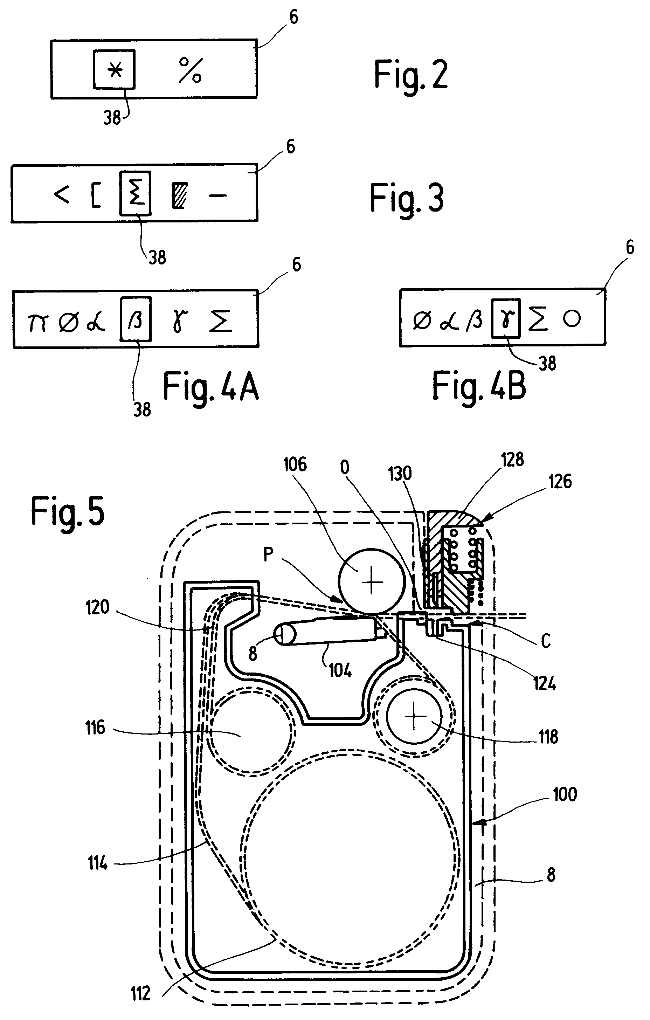

Figure 2 shows an alternative embodiment of the invention in which information is displayed on display 6. In particular, both of the available symbols associated with the letter "U" are displayed. A flashing cursor 38 will be associated with one or other of these symbols. To change the highlighted symbol, the first cursor key 28 would be actuated. This would then cause the other symbol to be marked with the flashing cursor 38. Actuation of the second cursor key 30 will cause the first symbol to be highlighted once again with the flashing cursor 38. Once the user has decided which of the two symbols he requires and has selected that symbol with the flashing cursor 38, the OK key 36 is actuated. The symbol which was highlighted with the flashing cursor 38 when the OK key 36 is actuated will be inserted into the image displayed on the display 6.

Five of the character keys 10 have functions associated therewith. Key 38 has the size function associated therewith whilst key 40 has the boxing and underlining function associated therewith. Keys 42, 44 and 46 have associated therewith the style function, the two line function and the number lock function respectively. Alternatively a fixed length function may be associated with one of these keys. When one of these functions is desired, the shift key 12 is actuated along with the desired key 38 to 46. By way of example, Figure 3 shows the information displayed on the display 6 when the shift key together with the boxing and underlining function key 40 are actuated at the same time. The display 6 shows four boxing options, an underline option and a no boxing option. The first option corresponds to the no box option, the second to a box with triangular ends, the third to a box with rounded ends, the fourth to a box with zig-zag ends, and the fifth to a box, the inside of which is shaded. The sixth option will select underlining of the text. There is a seventh boxing option which is a crocodile box. As the display 6 is only able to accommodate six options at a time, the seventh option will be displayed when the cursor is over the sixth option and is moved to the right with the right cursor key 28. The seventh option will then be displayed. The first option can be similarly obtained if it is not displayed because the seventh option is displayed, by moving the cursor to the left with the left cursor key. A flashing cursor 38 is provided. The cursor 38 is moved using the right and left cursor keys 28 and 30 until the desired boxing or underline option has been selected by the flashing cursor 38. To confirm the choice, the OK key 36 is actuated. The input image will then either be underlined, surrounded by the box with the selected frame shape or have no boxing.

The size function allows the user to select one of a limited number of character sizes. The style function allows the user to select the desired font for the character. The two line function allows the user to insert a new line to allow a second line of text to be provided. This option may not be available with certain styles and font sizes, if boxing or underlining has been selected. The number lock key when actuated means that the numbers associated with the character keys will be obtained when those keys are actuated. If the characters associated with those keys are required when the number lock function is in place, the shift key is actuated at the same time the respective character keys are actuated. To remove the number lock function, the number lock function key is actuated again in conjunction with the shift key 12. With the fixed length option if available, the user is invited to input a desired length for the text using the numeral keys. With all of these function keys, the required option is selected using the first and second cursor keys 28 and 30 and the selected option is confirmed by actuation of the OK key 36.

The secondary functions associated with the first and second cursor keys 28 and 30 is to allow the user to proceed immediately to the end or beginning respectively of the input text. A secondary function associated with the print key 24 allows the user to view an image of the entire label on the display 6. If the entire label is too large to be displayed on the display at one time, the label will automatically be scrolled across the screen from its beginning to its end. The secondary function associated with the delete key 32 clears the display and allows the user to input a new image. In other words, a new label can be defined.

Finally, the secondary function associated with the space key 26 is the symbol function. When the shift key 12 is actuated at the same time as the space key 26, the symbol function is selected. This causes a prompt "A-F" to be displayed on the display 6. A-F represent six groups of symbols. To select one group of symbols, the respective character key, eg the character key for the letter "A" is actuated. The symbols associated with the selected group are then displayed. The desired symbol can then be selected using the cursor keys 28 and 30. When the cursor is over the desired symbol, the OK key 36 is actuated to confirm the choice. The selected symbol will be inserted at the location of the cursor in the input image. If the selected group of symbols does not include the desired symbol, a different group of symbols can be selected if the user actuates the key associated with another character from the initially displayed group of "A-F".

In an alternative embodiment, actuation of the shift key 12 with the space key causes a number of symbols to be displayed on the display. However, not all of the symbols available can be accommodated on the display. In this regard, reference is made to Figures 4A and 4B. In Figure 4A, the initially displayed symbols are shown with the flashing cursor 38 arranged over the fourth symbol, ie "β". If the cursor key 28 is actuated, the symbol next to "β" is highlighted. However, the flashing cursor 38 remains over the fourth symbol displayed on the display 6. This is because the first symbol, "Π", is no longer displayed and the symbol following the last symbol "Σ" on the display shown in Figure 4A is now displayed as can be seen from Figure 4B. In this way, the user can scroll through the available symbols. The desired symbol is selected by ensuring that the flashing cursor 38 is over that desired symbol. To include the selected symbol in the text of a label, the OK key 36 is actuated.

In the apparatus described hereinbefore the shift key 12 is a non-latching key. In other words, it must remain depressed in order to obtain the secondary function. However, in other embodiments of the present invention, the shift key 12 may be a latching key. Thus, once the shift key 12 has been actuated to obtain the secondary functions, the desired secondary functions can be obtained simply by pressing the required keys. The shift key 12 must be actuated again in order to obtain the primary functions. In an alternative embodiment, the latching of the shift key only effects the operation of the key actuated immediately after the shift key has been actuated. The shift key is then released and must be actuated again if a further shift function is required.

The display 6 is generally a liquid crystal display (LCD) which displays the data as it is entered. The display 6 allows the user to view all or part of the label to be printed which facilitates the editing of the label prior to its printing. As discussed above, the display is also used to display various options which are selected by the user. The display 6 may also display messages to the user, for example, error messages or an indication that the print key should be pressed or actuated.

Reference will now be made to Figure 5. The cassette receiving bay 8 is arranged to receive a cassette 100. The cassette receiving bay 8 has a lid 40 which is normally closed. Figure 5 shows the interior of the cassette receiving bay 8 with the lid 40 removed. The cassette 100 holds a supply spool 112 of image receiving tape 114 which comprises an image receiving layer secured to a backing layer via a layer of adhesive. The image receiving tape 114 is guided by a guide mechanism (which is not shown) through the cassette, out of the cassette through an outlet 0, past the print location P to a cutter location C.

The cassette 110 also has an ink ribbon supply spool 116 and an ink ribbon take up spool 118. The ink ribbon 120 is guided from the ink ribbon supply spool 116 through the print location P and taken up on the ink ribbon take up spool 118. The image receiving tape 114 passes in overlap with the ink ribbon 120 through the print location P with its image receiving layer in contact with the ink ribbon.

Also shown in the cassette bay 8 is a thermal print head 104 and a platen 106. The print head 104 and platen 106 co-operate to define the print location P. The print head 104 is pivotable about a pivot point 108 so that it can be brought into contact with the platen 106 for printing and moved away from the platen 108 to enable a cassette to be removed and replaced.

In the arrangement shown in Figure 5, the platen 6 is driven so that it rotates to drive the image receiving tape 114 past the print location P during printing. In this way, tape is printed and fed out from the print location P. The cassette receiving bay also incorporates a cutting mechanism 126. The cutting mechanism 126 includes a cutter support member 128 which carries a blade 130. The blade 130 cuts the image receiving tape 114 and enters a slot 124 defined in the cassette 100.

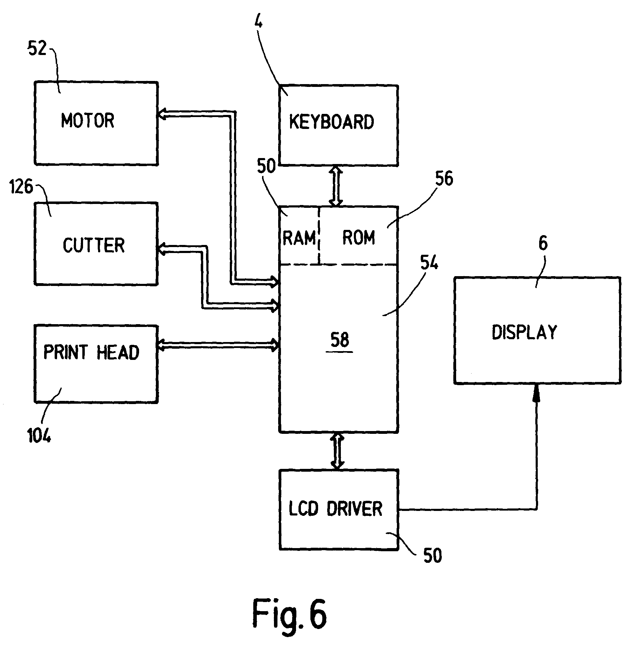

Reference will now be made to Figure 6 which illustrates a simplified block diagram of the control circuitry for controlling the tape of printing apparatus shown in the previous figures. The display 6 is driven by a LCD driver 50. The platen shown in Figure 5 is driven by a motor 52, for example a DC motor or a stepper motor. Where the motor 52 is a DC motor, the image receiving tape is driven continuously through the print zone P during printing. Alternatively, in those embodiments where the motor is a stepper motor, the platen 106 rotates stepwise to drive the image receiving tape 114 through the print zone P during the printing operation. However, it should be appreciated that any type of motor operated in any suitable manner can be used with embodiments of the present invention.

The print head 104 is preferably a thermal print head comprising a column of a plurality of printing elements. The print head 104 is preferably only one printing element wide and the column extends in the direction perpendicular to the lengthwise extent of the image receiving tape 114. The height of the column printing elements is preferably substantially equal to the width of the image receiving tape 114 to be used with the label printing apparatus 2. Where more than one width of image receiving tape 114 is used the print head column will generally have a height suitable for printing on the largest width of image receiving tape 114. Generally, the image will be printed on the image receiving tape by the ink ribbon 120. Alternatively, if the image receiving tape 114 is of a suitably thermally sensitive material, an image can be applied directly to the tape by the print head, without the need for any ink ribbon. The ink ribbon can therefore be dispensed with.

The control circuitry includes a microprocessor chip 54 having a read only memory (ROM) 56, a microprocessor 58 and random access memory capacity indicated diagrammatically by RAM 60. The microprocessor 58 is controlled by programming stored in the ROM 56 and when so controlled acts as a controller. It should be appreciated that the microprocessor chip can be replaced by a separate microprocessor, a separate ROM and a separate RAM.

The microprocessor chip 54 is connected to receive label data input to it from the keyboard 4. The microprocessor chip 20 outputs data to drive the display 6 via the display driver 50 to display a label to be printed (or a part thereof) and/or messages or instructions to the user. The display driver 50 may form part of the microprocessor chip 54. The microprocessor chip 54 also outputs data to drive the print head 104 which prints an image on the image receiving tape 114 to form a label. Finally, the microprocessor chip 54 also controls the motor 52 driving the image receiving tape 114 through the tape printing apparatus 2. The microprocessor chip 54 may also control the cutting mechanism 126 to allow lengths of image receiving tape 114 to be cut off after an image has been printed thereon. Alternatively, the cutting mechanism 126 may be manually operable.

The ROM 56 may store information relating to the various characters and symbols which are associated with respective keys of the keyboard as well as information relating to the various functions. For example, when a key is depressed, data concerning the associated character, number or symbol is retrieved from the ROM 56 and then stored in the RAM 60. The data stored in the RAM may be in the form of a code which identifies the character etc. The microprocessor 54 in accordance with the data stored in the RAM 60 generates data which is transmitted in one form column by column to the print head 104 and to the display 6 in another form. Additionally, data concerning a function may be retrieved from the ROM 56 in response to activation of the respective function key. The data generated by the microprocessor 54 and sent to the print head 104 and the display 6 may take into account the data relating to one or more of the functions stored in the RAM 60. Whilst the present invention has been described in relation to a system using a single cassette, embodiments of the present invention may use two cassettes, one containing the image receiving tape and the other containing ink ribbon.

It would be possible to add another function key, which is indicated by reference numeral 47 in figure 1, for the purpose of currency conversion. This is of special interest in the context of the Euro to be introduced in the EU in 1999. Thus, a key having a function marked with a Euro symbol or with the text "Euro" is present. When this key is depressed (possibly in the way the "size" key is activated in Figure 1), the user inputs a price in a first currency, eg DM. When the user inputs a value of eg 10, the label printed when the print key is depressed would contain the text "DM 10 = Euro 5,12". The second price is obtained by multiplying the inputted price with a fixed conversion factor. The first currency and thus the conversion factor could be fixed (country-specific) or user-defined, by use of another function key. In order to convert a price quoted in Euro into a national currency, a second "Euro Inversion" key could be implemented, which would allow the user to input a price in the Euro currency. When the user inputs eg. a price of 10 Euro, the printed label would contain a text as "Euro 10 = DM 19,53".

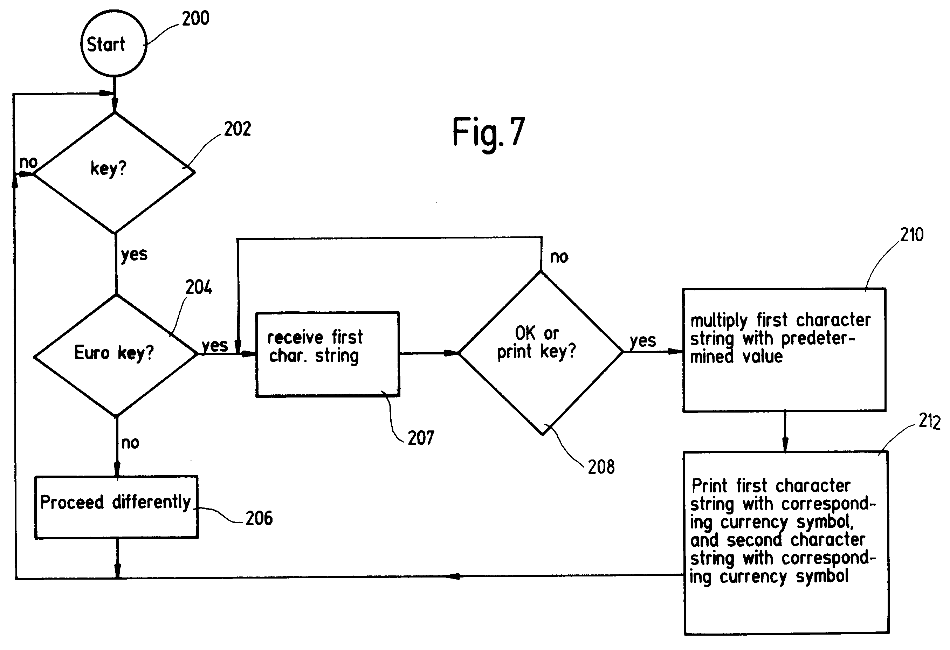

This is in more detail shown in Figure 7. After start indicated by step 200, ie when the tape printer has been switched on, first of all an investigation is performed whether a key has been depressed (step 202). When this is wrong, the same step is executed again. Otherwise, it is checked in step 204 whether the Euro key (47) has been depressed. When this is not true, step 206 is executed, in which the controller proceeds differently, ie as defined by the respective actuated key. Step 206 is also followed by step 202. When the Euro key 47 has indeed been depressed in step 204, step 207 is executed, in which the controller receives a first character string. Thus, the user can depress a numeral key or actuate a key representing a decimal point or comma, in order to define a first numeric value. When any of the remaining character keys is depressed, it is simply ignored in order to prevent erroneous inputs. It is however possible to depress the OK key 36 and the print key 24 in step 207; these keys are not ignored. After step 207, step 208 is executed in which it is investigated whether the OK key 36 or the print key 24 has been depressed (or a return key, when present). When this is not true, step 207 is executed again, allowing the user to actuate another numeral key in order to continue inputting the desired first character string. When step 208 reveals that the OK key or the print key has been depressed, step 210 is executed. In this step, a numeric value represented by the first character string is multiplied with a predetermined value, which can be pre-stored or user inputted, in order to obtain a second numeric value to be printed as a second character string. Finally, in step 212 the first character string is printed with a corresponding currency symbol, together with the second character string and a currency symbol corresponding thereto onto the image receiving tape. It should be mentioned that when in step 208 the OK key has been depressed, printing is not performed, but the second character string is just shown on the display. The mentioned printing operation can then be executed when the print key 24 is depressed afterwards. For sake of simplicity, this has not been shown in Figure 7.

## Claims

1. A tape printing apparatus for printing a label image on an image receiving tape (114) comprising:
input means for inputting characters and numerals for defining a label image to be printed;
printing means for printing said label image onto the image receiving tape (114);
a controller (58) connected to the input means, and operable to control the printing means;
characterised in that the controller (58) is operable to convert a first numeric value represented by an inputted first character string into a second numeric value represented by a second character string, by multiplication (or division) of the first numeric value with a predetermined value, and to print the first character string and the second character string onto the image receiving tape (114).

2. A tape printing apparatus as claimed in claim 1, wherein the first character string and/or the second character string comprises at least one numeral and optionally a decimal point or comma.

3. A tape printing apparatus as claimed in claim 1 or 2, wherein the input means comprises a key, preferably marked with a currency symbol as Euro, upon depression of which the controller is operable to receive a first character string, and to print the first character string and the second character string onto the image receiving tape (114) upon depression of a second key.

4. A tape printing apparatus as claimed in any of the preceding claims, wherein the second key is a print key.

5. A tape printing apparatus as claimed in any preceding claim, wherein the predetermined value is fixed.

6. A tape printing apparatus as claimed in claim 5, wherein the predetermined value depends on a specific country in which the apparatus is intended to be used.

7. A tape printing apparatus as claimed in any one of claims 1 to 4, wherein the predetermined value is user defined.

8. A tape printing apparatus as claimed in claim 7, wherein a function key is provided, upon depression of which the controller is operable to receive a user-inputted predetermined factor.

9. A tape printing apparatus as claimed in any one of the preceding claims, wherein another key is provided, upon depression of which the controller is operable to receive a second character string, and to print the second character string and a first character string onto the image receiving tape (114) upon depression of a second key, whereby the first character string represents a numeric value obtained by division or multiplication of a numeric value represented by the second character string with the predetermined value.

10. A tape printing apparatus as claimed in any of the preceding claims, wherein the first character string and the second character string are printed onto the image receiving tape (114) together with associated currency symbols.
